# NOUVEAU FASCICULE DE BREVET EUROPEEN

(11) **EP 1 390 706 B2**
(45) Date de publication et mention de la décision concernant l'opposition: **23.01.2013**
(45) Mention de la délivrance du brevet: 12.03.2008
(21) Numéro de dépôt: 02732799.8
(22) Date de dépôt: 10.04.2002
(51) Int. Cl.: G01M 3/32

(54) **PROCÉDÉ ET DISPOSITIF DE DÉTECTION DE FUITE DANS UN ÉCHANGEUR DE CHALEUR, NOTAMMENT À PLAQUES**
VERFAHREN UND GERÄT ZUR AUFSPÜRUNG VON UNDICHTIGKEITEN VON PLATTENWÄRMETAUSCHERN
METHOD AND DEVICE FOR DETECTING A LEAK IN A HEAT EXCHANGER, ESPECIALLY A PLATE-TYPE HEAT EXCHANGER

(30) Priorité: 23.04.2001 FR 0105442
(43) Date de publication de la demande: 25.02.2004
(73) Titulaire: Tetra Laval Holdings & Finance S.A., 1009 Pully (CH)
(72) Inventeur: RABELLE, Gérard, Tetra Pak Processing Snc, BP No 50425 Villepinte, F-95944 Roissy (FR)
(74) Mandataire: Gendron, Vincent Christian
(86) Numéro de dépôt international: PCT/FR2002/001256
(87) Numéro de publication internationale: WO 2002/086438

(56) Documents cités:
- EP-A- 1 022 552
- WO-A1-99/19705
- DE-C2- 4 408 073
- GB-A- 2 314 421
- US-A- 6 009 745
- DIN EN 1779

## Description

L'invention concerne un procédé et un dispositif de détection de fuite dans un échangeur de chaleur pour fluides, notamment dans un échangeur de chaleur à plaques, du type utilisé pour le traitement du lait.

Un échangeur de chaleur comprend un premier circuit dans lequel peut circuler un premier fluide, et un second circuit dans lequel peut circuler un second fluide, une partie importante des premier et second circuits étant en contact intime pour favoriser les échanges thermiques entre les deux fluides. Les échangeurs à plaques sont constitués de plusieurs sections de plusieurs paquets de plaques ondulées assemblées par des joints et sont bien adaptés aux échanges thermiques longs (on peut se reporter par exemple au brevet US 6 116 332 pour un example d'échangeur à plaques). Il est évidemment capital que les fluides des deux circuits ne soient pas en communication directe et donc il convient de s'assurer périodiquement qu'il n'y a pas de fuite d'un circuit à l'autre.

On a déjà proposé de nombreux procédés et dispositifs de détection des fuites, permettant d'éviter le démontage systématique et le contrôle de toutes les plaques de l'échangeur.

Par example, le document DE 4 408 073 décrit un échangeur à plaques utilisé pour le traitement du lait.

Par exemple, selon un procédé décrit dans le document WO 95/16900, on envoie une solution saline dans un circuit et de l'eau dans l'autre, et la mesure de la conductivité de l'eau du second circuit permet de détecter s'il y a eu passage de sel d'un circuit à l'autre, c'est-à-dire s'il y a une fuite. Si oui, une mesure par ultrasons permet de déterminer quelle plaque est percée. Un tel test demande du temps (généralement environ 4 heures) et il a l'inconvénient de n'être pas prédictif, en ce sens qu'il ne donne aucune information sur la qualité des joints.

Selon le brevet US 6009745, on fait circuler une solution de solvant dans un circuit et un gaz dans l'autre, on établit une pression différentielle dans les deux circuits et on observe visuellement l'apparition d'un dépôt de soluté à l'endroit des fuites. Mais une telle solution, qui nécessite une inspection visuelle n'est guère possible là où les fuites sont dérobées aux regards.

Selon le brevet US 5170840, on fait circuler dans un circuit une solution d'acide sulfamique et dans l'autre un mélange coloré de soude caustique et de permanganate de potassium, et on observe les fuites colorées qui peuvent se produire. Cette solution présente le même inconvénient que la précédente.

Il existe aussi un procédé selon lequel on met en pression chaque circuit de chaque section, section après section, et on observe l'évolution de la pression, sa chute marquée dans un circuit d'une section indiquant l'existence d'un problème. Un tel système est également très long à mettre en oeuvre.

Le but de l'invention est de proposer un nouveau procédé (et le dispositif de mise en oeuvre associé) pour la détection de fuite, qui ne présente pas les inconvénients des procédés connus et permette de tester un échangeur de manière plus rapide et plus facile.

L'invention atteint son but grâce à un procédé de détection d'une fuite selon la revendication 1.

L'invention permet de définir plusieurs sections dans les deux circuits en fonction du raccordement des entrées/sorties des plaques de l'échangeur, et de tester simultanément plusieurs sections de l'échangeur.

Avantageusement, on indique automatiquement les raccordements à faire avec un module hydraulique de test pour tester simultanément lesdites plusieurs sections.

Le dispositif associé pour la détection d'une fuite est celui de la revendication 4.

Avantageusement, le dispositif comprend un module hydraulique et un module électronique séparés, le module hydraulique comportant une pluralité de prises de raccordement à une pluralité d'entrées/sorties de l'échangeur à plaque de manière à pouvoir tester simultanément plusieurs sections de l'échangeur.

Avantageusement, le module électronique renferme un logiciel d'exploitation des mesures de pression déterminées au niveau des prises de raccordement du module hydraulique.

Avantageusement, le logiciel indique, en fonction de la configuration des sections entrée en données, les raccordements à faire à partir des prises de raccordement pour effectuer les mesures.

Ainsi, selon la présente invention, on remplit de fluide (et ce fluide est de préférence de l'eau, ce qui a l'avantage de ne pas polluer les circuits) les deux circuits, on met en pression les deux circuits dans toutes les sections à la fois en y établissant une pression différentielle, et on observe l'éventuel rapprochement critique des pressions dans toutes les sections à la fois, grâce aux mesures permanentes de la pression et au logiciel d'exploitation des mesures. Le logiciel intégré dans le module électronique prend en compte la configuration des entrées/sorties définissant les sections, et en déduit automatiquement les raccordements à faire pour l'établissement du test dans les différentes sections ; il permet ensuite, par l'observation des résultats du test, d'en déduire la ou les sections où une fuite est détectée.

L'avantage de l'invention est qu'on peut travailler à la pression de service de l'échangeur, ce qui permet de détecter les fuites dans les conditions de service, ou faire un test constructeur à une pression plus forte (ce qui permet de monter à une pression qui permet de contrôler aussi les joints). Il permet aussi l'observation des microfissures en prenant une pression d'observation plus forte. Cela confère un aspect prédictif au test de l'invention. Compte tenu de la rapidité du test, on peut aussi refaire le test en inversant la pression différentielle dans les deux circuits de manière à forcer les microfissures à s'ouvrir au moins dans un des deux sens, ce qui permet de détecter certains types de microfissures unidirectionnelles.

D'autres caractéristiques et avantages de l'invention ressortiront à la lecture de la description qui va suivre, en référence aux dessins annexés sur lesquels :
- la figure 1 est une vue en perspective schématique du dispositif de l'invention et notamment des modules hydraulique et électronique,

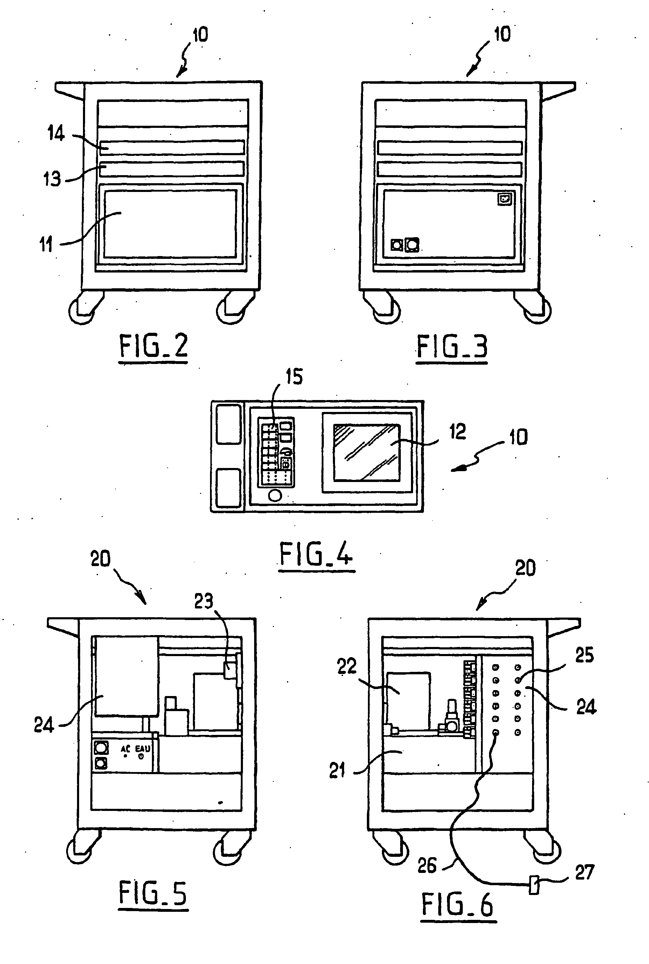

- les figures 2, 3, et 4 sont des vues schématiques de devant, de derrière et de dessus du module électronique,
- les figures 5 et 6 sont des vues schématiques de devant, de derrière et de dessus du module hydraulique

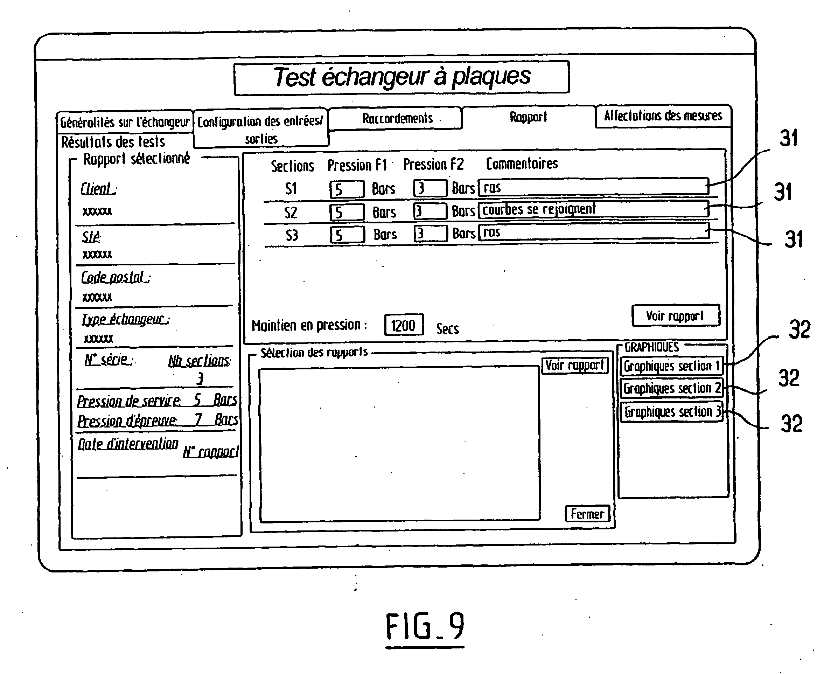

- les figures 7 à 9 montrent des exemples d'écran apparaissant sur le module électronique au cours d'un test,
- les figures 10 et 11 sont des graphiques des courbes de pression dans les deux circuits de deux sections d'un échangeur, la première étant normale, la seconde montrant une fuite.

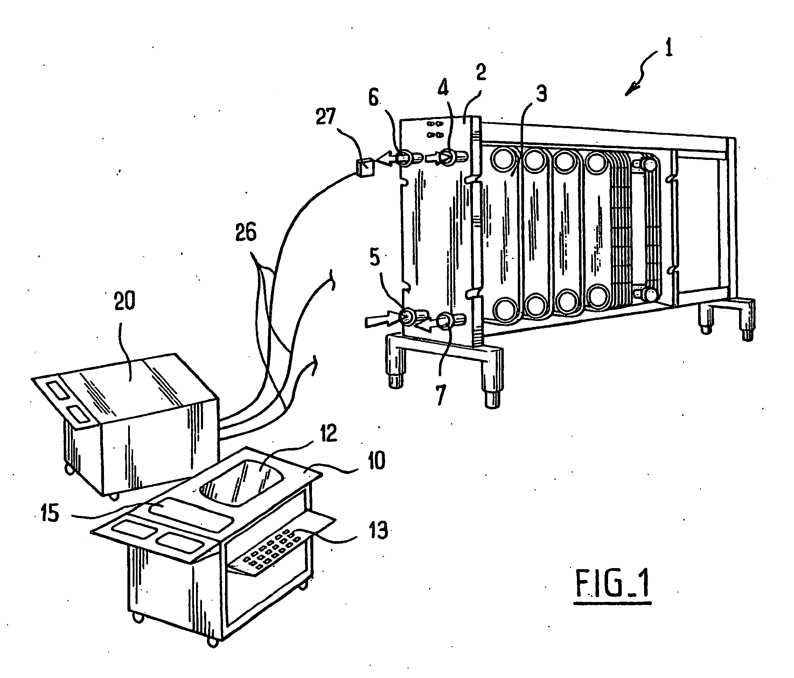

La figure 1 montre une section d'un échangeur 1 à plaques constitué d'un bâti 2 supportant des paquets de plaques à reliefs 3 assemblées côte à côte par des joints et définissant entre elles deux circuits adjacents comportant des entrées respectives 4, 5 et des sorties 6, 7 accessibles sur une paroi du bâti 2. Chaque plaque ou paquet de plaques comporte ses propres entrées/sorties et les deux circuits peuvent former plusieurs sections définies selon le raccordement choisi des diverses entrées/sorties des plaques à l'intérieur de l'échangeur.

Le dispositif de l'invention se présente sous la forme matérielle de deux modules respectivement électronique 10 et hydraulique 20 comportant chacun un chariot supportant ou renfermant un certain nombre d'appareils.

Le module électronique 10 comporte une unité de traitement informatique reliée à des périphériques tels qu'un écran 12 lisible de dessus, une imprimante 13 placée en tiroir, un clavier 14 placé en tiroir, et un panneau 15 d'instruments de mesure, de signalisation ou de commutation.

Le module hydraulique 20 comporte un bac 21 équipé d'une pompe entraînée par un moteur 22. Une prise de raccordement 23 permet de raccorder le groupe hydraulique à une alimentation en fluide de test, avantageusement de l'eau. Une boîte de raccordement 24 comporte diverses prises 25 qui peuvent être reliées sélectivement par des tuyaux 26 munis de connecteurs 27 aux entrées/sorties 4-7 (ou autres) de la section d'échangeur à tester. Dans l'exemple représenté, il y a six paires de prises 25 permettant l'étude simultanée de six sections d'échangeur. Chacune des paires de prises est reliée, dans le module, à un capteur de pression qui permet de déterminer en permanence la pression dans les deux circuits des différentes sections.

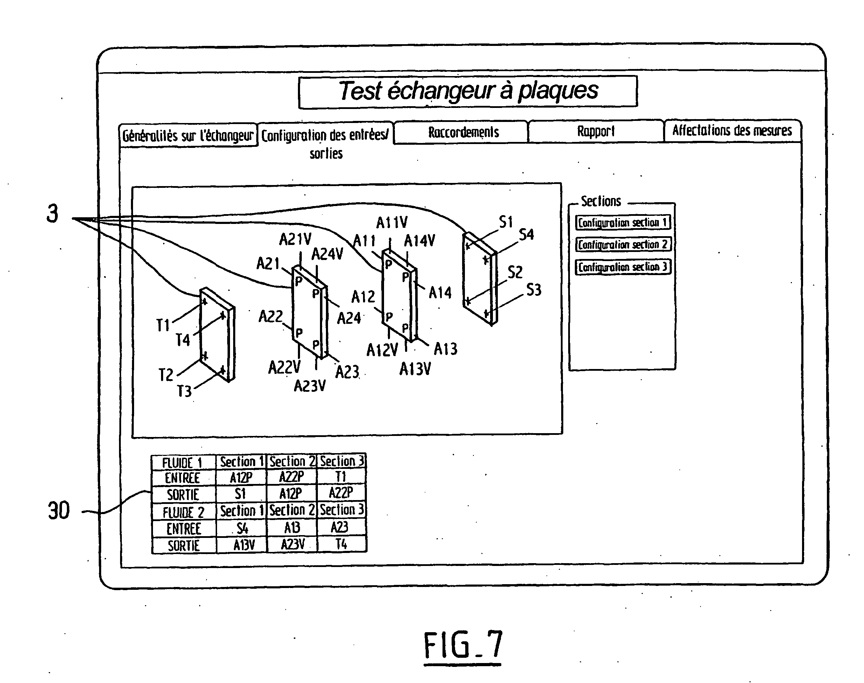

Le logiciel intégré dans l'unité de traitement du module électronique permet de prendre en compte la configuration des entrées/sorties définissant les sections, par exemple sous la forme représentée à la figure 7 qui montre un des écrans apparaissant lors du test. Cet écran montre les quatre plaques 3 de l'échangeur avec leurs entrées/sorties repérées par un code. Le tableau 30 montre quelles sont précisément les entrées/sorties des trois sections définies dans cet exemple.

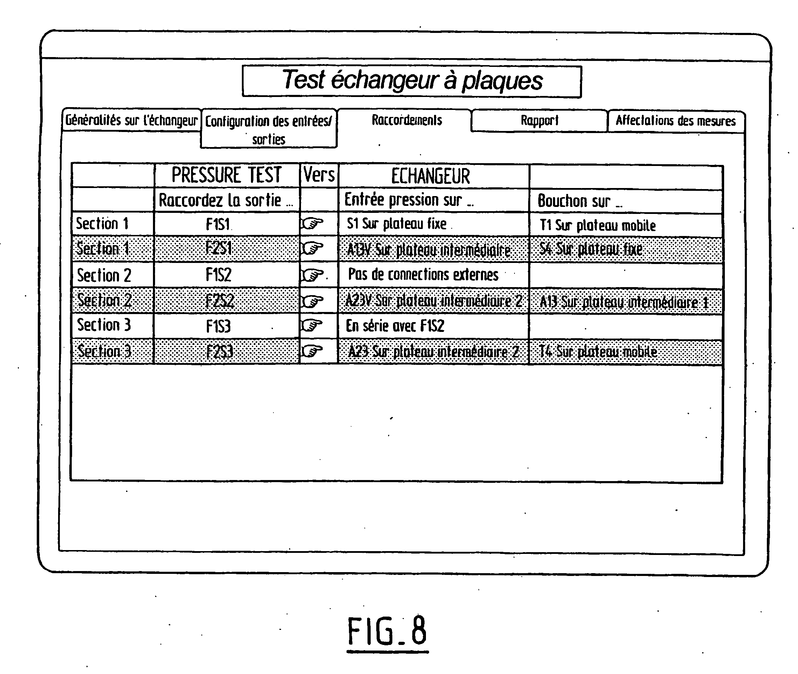

Sur la base de cette configuration entrée par l'utilisateur en tant que donnée, le logiciel en déduit les raccordements à faire pour l'établissement du test dans les différentes sections et ces raccordements sont indiqués par l'écran visible sur la figure 8, indiquant à quel endroit il faut raccorder chacun des tuyaux 26 du module hydraulique.

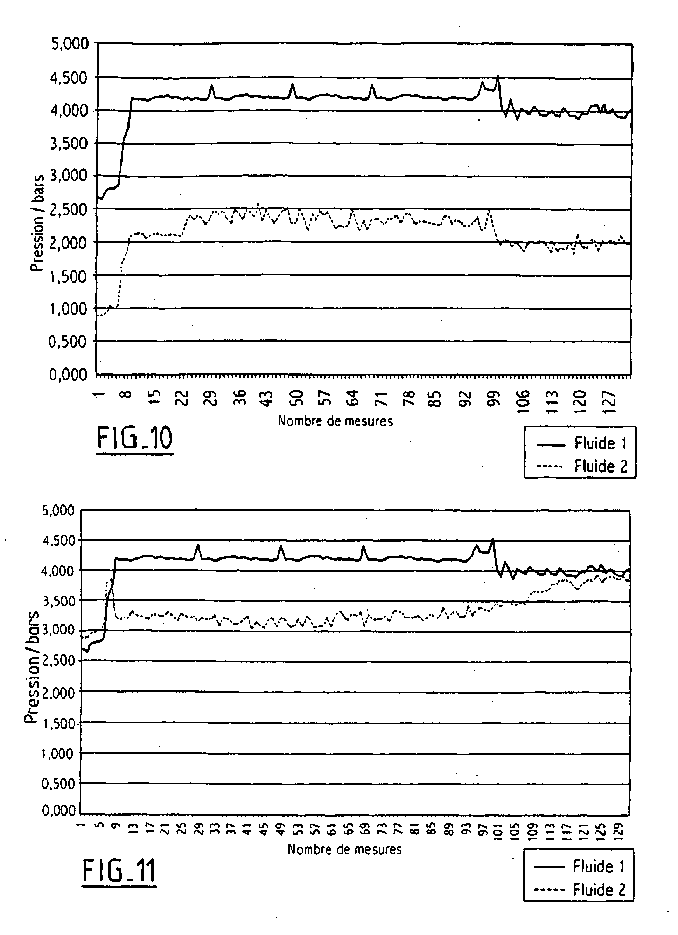

Une fois que ces raccordements ont été effectués, le test est déclenché, depuis le module électronique, en ayant auparavant réglé les valeurs de pression désirées. La pression d'épreuve est avantageusement supérieure à la pression de service pour assurer l'ouverture des fissures en formation ; par exemple, la première est de 5 à 15 bars lorsque la seconde est de 3 à 10 bars. La pression différentielle a établir entre les deux circuits est aussi réglée, par exemple entre 2 et 5 bars, et on règle aussi le maintien en pression, par exemple à 20 minutes. Les valeurs de pression du fluide dans les deux circuits de toutes les sections étudiées (par exemple trois sections) sont mesurées simultanément en permanence (ou par intervalles de temps rapprochés), ce qui permet d'établir pour chaque section un graphique des deux courbes de pression. Le logiciel calcule simultanément la différence de pression entre les deux courbes à chaque intervalle de temps et signale un rapprochement notable (c'est-à-dire en deçà d'un seuil prédéfini), voire un croisement des courbes par une indication lisible sur l'écran, dans les cases 31 ; s'il n'y a pas de rapprochement critique, cela est également signalé. Des boutons 32 permettent d'accéder si l'on veut au graphique lui-même, du type de ceux des figures 10 ou 11 représentant respectivement un cas où il n'y a pas rapprochement notable et un cas où il y a rapprochement critique (et donc fuite).

On peut donc déduire des résultats du test que la section 2 de l'échangeur fuit.

## Revendications

1. Procédé de détection d'une fuite entre les deux circuits d'un échangeur (1) à plaques, du type selon lequel on remplit de fluide sous une pression différente chacun des deux circuits, **caractérisé en ce qu'**on observe l'évolution des pressions dans les deux circuits et **en ce qu'**on contrôle automatiquement un rapprochement des pressions observées dans les deux circuits en deçà d'un certain seuil donné et **en ce qu'**on signale une fuite détectée lorsqu'on a détecté ledit rapprochement, l'observation comprenant le calcul périodique de la différence entre les deux pressions, la fuite étant signalée lorsque cette différence devient inférieure audit certain seuil donné.

2. Procédé selon la revendication 1, **caractérisé en ce qu'**on définit plusieurs sections dans les deux circuits en fonction du raccordement des entrées/sorties des plaques de l'échangeur (1), et **en ce que** l'on teste simultanément plusieurs sections de l'échangeur (1).

3. Procédé selon la revendication 2, **caractérisé en ce qu'**on indique automatiquement les raccordements à faire avec un module hydraulique de test pour tester simultanément lesdites plusieurs sections.

4. Dispositif pour la détection d'une fuite entre les deux circuits d'un échangeur à plaques (1), du type qui comprend des moyens pour remplir de fluide sous une pression différente chacun des deux circuits, **caractérisé en ce qu'**il comprend des moyens de contrôle automatique du rapprochement des pressions dans les deux circuits par rapport à un seuil donné, et des moyens de signalement d'une fuite en fonction lorsque les moyens de contrôle automatique ont constaté ledit rapprochement, lesdits moyens de contrôle comprenant des moyens de mesure de la pression différentielle lesdits moyens de mesure de la pression différentielle comprenant des moyens de mesure adaptés à mesurer simultanément la pression du fluide dans les deux circuits et des moyens logiciels de calcul adaptés à calculer périodiquement la différence de pression entre les pressions des deux circuits.

5. Dispositif selon la revendication 4, **caractérisé en ce qu'**il comprend un module hydraulique (20) et un module électronique (10) séparés, le module hydraulique comportant une pluralité de prises (25) de raccordement à une pluralité d'entrées/sorties (4-7) de l'échangeur (1) à plaques de manière à pouvoir tester simultanément plusieurs sections de l'échangeur.

6. Dispositif selon la revendication 5, **caractérisé en ce que** le module électronique (10) renferme un logiciel d'exploitation des mesures de pression déterminées au niveau des prises de raccordement (25) du module hydraulique (20).

7. Dispositif selon la revendication 6, **caractérisé en ce que** le logiciel indique, en fonction de la configuration des sections entrée en données, les raccordements à faire à partir des prises de raccordement (25) pour effectuer les mesures.

## Claims

1. Method for detecting a leak between the two circuits of a plate-type heat exchanger (1) of the type in which each of the two circuits is filled with fluid under a different pressure, **characterised in that** the development of the pressures in the two circuits is observed, and **in that** it is automatically monitored if the pressures observed in the two circuits approach each other within a certain given threshold, and **in that** a detected leak is signalled when such an approach has been detected, this observation comprising the periodical calculation of the difference between the two pressures, the leak being signalled when this difference becomes less than the said certain given threshold.

2. Method as claimed in claim 1, **characterised in that** several sections are defined in the two circuits according to the connection of the inlets/outlets of the plates of the heat exchanger (1), and **in that** several sections of the heat exchanger (1) are tested simultaneously.

3. Method as claimed in claim 2, **characterised in that** the connections to be made with a hydraulic test module in order to test the said several sections simultaneously are automatically indicated.

4. Device for detecting a leak between the two circuits of a plate-type heat exchanger (1), of the type which comprises means for filling each of the two circuits with fluid under a different pressure, **characterised in that** it comprises means for automatically monitoring if the pressures in the two circuits approach each other with respect to a given threshold, and means for signalling a leak during operation when the automatic monitoring means have detected this approach, the said monitoring means comprising means for measuring the differential pressure, the said means for measuring the differential pressure comprise measuring means adapted to measure the pressure of the fluid in the two circuits simultaneously and calculating software means adapted to calculate the pressure difference between the pressures of the two circuits periodically.

5. Device as claimed in claim 4, **characterised in that** it comprises a hydraulic module (20) and an electronic module (10) which are separate, the hydraulic module comprising a plurality of connectors (25) for connecting to a plurality of inlets/outlets (4-7) of the plate-type heat exchanger (1) so as to be able to test several sections of the heat exchanger simultaneously.

6. Device as claimed in claim 5, **characterised in that** the electronic module (10) includes software for utilising pressure measurements determined at the connectors (25) of the hydraulic module (20).

7. Device as claimed in claim 6, **characterised in that**, according to the configuration of the data input sections, the software indicates the connections to be made from the connectors (25) in order to carry out the measurements.

## Patentansprüche

1. Detektionsverfahren für eine Undichtheit bzw. eine Leckage zwischen zwei Kreisläufen eines Plattenwärmetauschers bzw. Plattentauschers (1) der Art, gemäß welcher ein Fluid unter einem für jeden der zwei Kreisläufe unterschiedlichen Druck gefüllt wird, **dadurch gekennzeichnet, daß** die Druckentwicklung in den zwei Kreisläufen beobachtet wird und automatisch eine Annäherung der beobachteten Drücke in den zwei Kreisläufen von dort bis zu einem gewissen, gegebenen Schwellwert kontrolliert bzw. gesteuert bzw. geregelt wird, und daß eine detektierte bzw. aufgespürte Undichtheit signalisiert wird, wenn diese Annäherung detektiert wird, wobei die Beobachtung die periodische Berechnung des Unterschieds zwischen den zwei Drücken umfaßt, wobei die Leckage signalisiert wird, wenn dieser Unterschied unter den gewissen, genannten Schwellwert absinkt.

2. Verfahren nach Anspruch 1, **dadurch gekennzeichnet, daß** mehrere Abschnitte in den zwei Kreisläufen als Funktion einer Verbindungsherstellung bzw. eines Anschlusses von Einlässen/Auslässen der Platten des Wärmetauschers (1) definiert werden, und daß gleichzeitig mehrere Abschnitte des Tauschers (1) getestet werden.

3. Verfahren nach Anspruch 2, **dadurch gekennzeichnet, daß** automatisch die Verbindung bzw. Verbindungsherstellung angezeigt wird, die mit einem hydraulischen Testmodul herzustellen ist, um gleichzeitig die mehreren Abschnitte zu testen.

4. Vorrichtung für die Detektion bzw. Aufspürung einer Undichtheit bzw. einer Leckage zwischen den zwei Kreisläufen eines Plattenwärmetauschers bzw. Plattentauschers (1) der Art, daß er Mittel zum Füllen von Fluid unter einem für jeden der Kreisläufe unterschiedlichen Druck umfaßt, **dadurch gekennzeichnet, daß** sie automatische Kontroll- bzw. Steuer- bzw. Regelmittel für eine Annäherung der Drücke in den zwei Kreisläufen in bezug auf einen gegebenen Schwellwert und Anzeige- bzw. Signalisierungsmittel für eine Leckage als Funktion umfaßt, wenn die automatischen Steuer- bzw. Regelmittel diese Annäherung konstatiert bzw. festgestellt haben, wobei die Steuer- bzw. Regelmittel Meßmittel für den unterschiedlichen Druck bzw. Differenzialdruck umfassen, wobei die Meßmittel für den unterschiedlichen Druck bzw. Differenzialdruck Meßmittel, die angepasst sind, simultan bzw. gleichzeitig den Druck des Fluids in den zwei Kreisläufen zu messen, und Logikrechenmittel umfassen, die angepasst sind, die Druckdifferenz zwischen den Drücken der beiden Kreisläufe periodisch zu berechnen.

5. Vorrichtung nach Anspruch 4, **dadurch gekennzeichnet, daß** sie ein hydraulisches Modul (20) und ein getrenntes elektronisches Modul (10) umfaßt, wobei das hydraulische Modul eine Mehrzahl von Anschlußstellen (25) mit einer Mehrzahl von Einlässen/Auslässen (4-7) des Plattentauschers (1) in der Weise umfaßt, um gleichzeitig mehrere Abschnitte des Tauschers testen zu können.

6. Vorrichtung nach Anspruch 5, **dadurch gekennzeichnet, daß** das elektronische Modul (10) eine Auswertelogik für Messungen von Drücken umfaßt, die auf dem Niveau der Anschlußstellen (25) des hydraulischen Moduls (20) bestimmt sind bzw. werden.

7. Vorrichtung nach Anspruch 6, **dadurch gekennzeichnet, daß** die Logik als Funktion der Konfiguration der gegebenen bzw. als Eingabe eingegebenen Eintrittsabschnitte die auszubildenden Verbindungsherstellungen ausgehend von den Anschlußstellen (25) anzeigt, um die Messungen auszuführen.
